# EUROPÄISCHE PATENTSCHRIFT

(11) **EP 1 260 257 B1**
(45) Veröffentlichungstag und Bekanntmachung des Hinweises auf die Patenterteilung: **23.02.2005**
(21) Anmeldenummer: 02405337.3
(22) Anmeldetag: 24.04.2002
(51) Int. Cl.: B01D 3/00

(54) **Flüssigkeitsverteiler für Kolonnen**
Liquid distributor for columns
Distributeur de liquide pour colonnes

(30) Priorität: 23.05.2001 EP 01810510
(43) Veröffentlichungstag der Anmeldung: 27.11.2002
(73) Patentinhaber: Sulzer Chemtech AG, 8404 Winterthur (CH)
(72) Erfinder: Fehr, Emil, 8415 Berg am Irchel (CH); Faust, Adrian, 8362 Balterswil (CH); Fischer, Markus, 78462 Konstanz (DE)
(74) Vertreter: Sulzer Management AG

(56) Entgegenhaltungen:
- EP-A- 0 501 615
- DE-A- 3 346 857

## Beschreibung

Die Erfindung betrifft einen Flüssigkeitsverteiler für Kolonnen gemäss Oberbegriff von Anspruch 1 sowie eine Kolonne mit einem derartigen Flüssigkeitsverteiler. Die Kolonne ist dabei für einen Stoffaustausch zwischen einem Gasstrom und einem auf einer Packung fliessenden Flüssigkeitsstrom vorgesehen.

Für eine gute Leistungsfähigkeit der Kolonne ist es erforderlich, dass keine Maldistribution der Flüssigkeit auftritt, d.h. dass die Flüssigkeit homogen verteilt über die Oberflächen innerhalb der Packung rieselt. Damit eine Maldistribution ausbleibt, muss die Flüssigkeit gleichförmig und genügend fein verteilt auf die Packung aufgegeben werden. Dies gelingt mittels einem geeignet ausgebildeten Flüssigkeitsverteiler, durch den die Flüssigkeit über ein Kanalsystem und unter Verwendung von Ausflusssystemen auf die Packung verteilt wird.

Bei einem bekannten Flüssigkeitsverteiler, dem die Bezeichnung "Elementverteiler" gegeben worden ist, besteht das Kanalsystem aus einem Hauptkanal und einer Mehrzahl von Nebenkanälen, die unterhalb dem Hauptkanal angeordnet sind. Mit einem Ausflusssystem des Hauptkanals wird die zu verteilende Flüssigkeit nach einem vorgegebenen Verhältnis in die Nebenkanäle eingespeist. Dieses Verhältnis ist in der Regel gleich dem Verhältnis zwischen den Teilflächen der Packungsoberfläche, die den Nebenkanälen zugeordnet sind und auf die Flüssigkeit proportional zum Flächeninhalt der Teilfläche zu verteilen ist. Durch ein Ausflusssystem der Nebenkanäle verlässt die Flüssigkeit den Verteiler. Das Ausflusssystem der Nebenkanäle liegt beispielsweise in Form einer Vielzahl von seitlichen Löchern mit Ableitrohren oder Prallblechen vor, oder einer Vielzahl von Grundlöchern. Das Ausflusssystem des Hauptkanals eines Verteilers, den es zu verbessern gilt, besteht üblicherweise aus haubenartigen, nach unten offenen Kammern, die im Boden des Hauptkanals über rechteckigen, den Nebenkanälen entsprechenden Öffnungen angeordnet sind, wobei die unteren Ränder der Kammern mit jenen der Öffnungen dicht verbunden, in der Regel verschweisst sind. Durchbrüche in den Seitenwänden dieser Kammern lassen die aus dem Hauptkanal austretende Flüssigkeit in die zugeordneten Nebenkanäle einströmen. Bei diesem Einströmen ergeben sich unruhige Strömungsfelder, die sich in Form eines fluktuierenden Ausfliessens störend im Ausflusssystem der Nebenkanäle bemerkbar machen. Bezüglich dem Hauptkanal besteht der Nachteil, dass die haubenartigen Kammern den Kanalquerschnitt einengen, der für die Strömung der zu verteilenden Flüssigkeit zur Verfügung steht, und dass die Konstruktion wegen Schweissarbeiten relativ teuer ist.

Aufgabe der Erfindung ist es, einen kostengünstigen Flüssigkeitsverteiler vom Typ "Elementverteiler" zu schaffen, in dem die Flüssigkeit unbehindert von einem Ausflusssystem durch den Hauptkanal strömt und derart in die Nebenkanäle geleitet wird, dass sie als beruhigte Strömung in die Ausflusssysteme der Nebenkanäle eintritt. Diese Aufgabe wird durch den im Anspruch 1 definierten Flüssigkeitsverteiler gelöst.

Der Flüssigkeitsverteiler weist einen Hauptkanal, eine Mehrzahl von Nebenkanälen und ein Ausflusssystem des Hauptkanals auf. Mit diesem Ausflusssystem ist die zu verteilende Flüssigkeit nach einem vorgegebenen Verhältnis in die Nebenkanäle einspeisbar. Das Ausflusssystem umfasst Durchbrüche in den Seitenwänden des Hauptkanals und - den Nebenkanälen zugeordnet - Führungsorgane für die durch die Durchbrüche austretende Flüssigkeit. Die Führungsorgane sind hinsichtlich einer Flüssigkeitsführung derart ausgestaltet, dass die Flüssigkeit jeweils in den zugeordneten Nebenkanal leitbar ist.

Die abhängigen Ansprüche 2 bis 7 betreffen vorteilhafte Ausführungsformen des erfindungsgemässen Flüssigkeitsverteiler. Anspruch 8 bezieht sich auf eine Kolonne mit einem erfindungsgemässen Flüssigkeitsverteiler.

Nachfolgend wird die Erfindung anhand der Zeichnungen erläutert. Es zeigen:
- Fig. 1: vereinfacht dargestellt, einen bekannten Flüssigkeitsverteiler mit Hauptkanal und Nebenkanälen,
- Fig. 2: ausschnittsweise dargestellt, einen erfindungsgemässen Flüssigkeitsverteiler,
- Fig. 3: einen Längsschnitt durch den oberen Teil einer Kolonne,
- Fig. 4, 5: Details zu drei Ausführungsformen des erfindungsgemässen Flüssigkeitsverteilers,
- Fig. 6: Draufsicht auf einen Flüssigkeitsverteiler, der zu dem in Fig.5 dargestellten Typ gehört, und
- Fig. 7: ein Detail zu einer Schnappverbindung zwischen einem Führungsorgan und einem Nebenkanal.

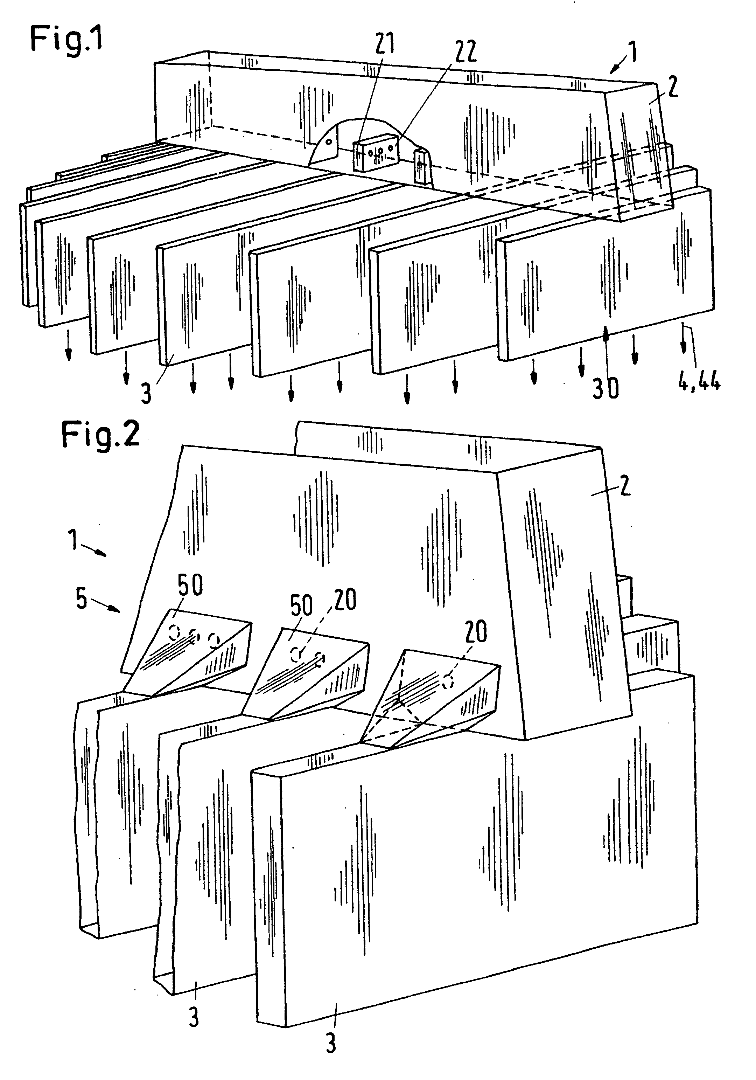

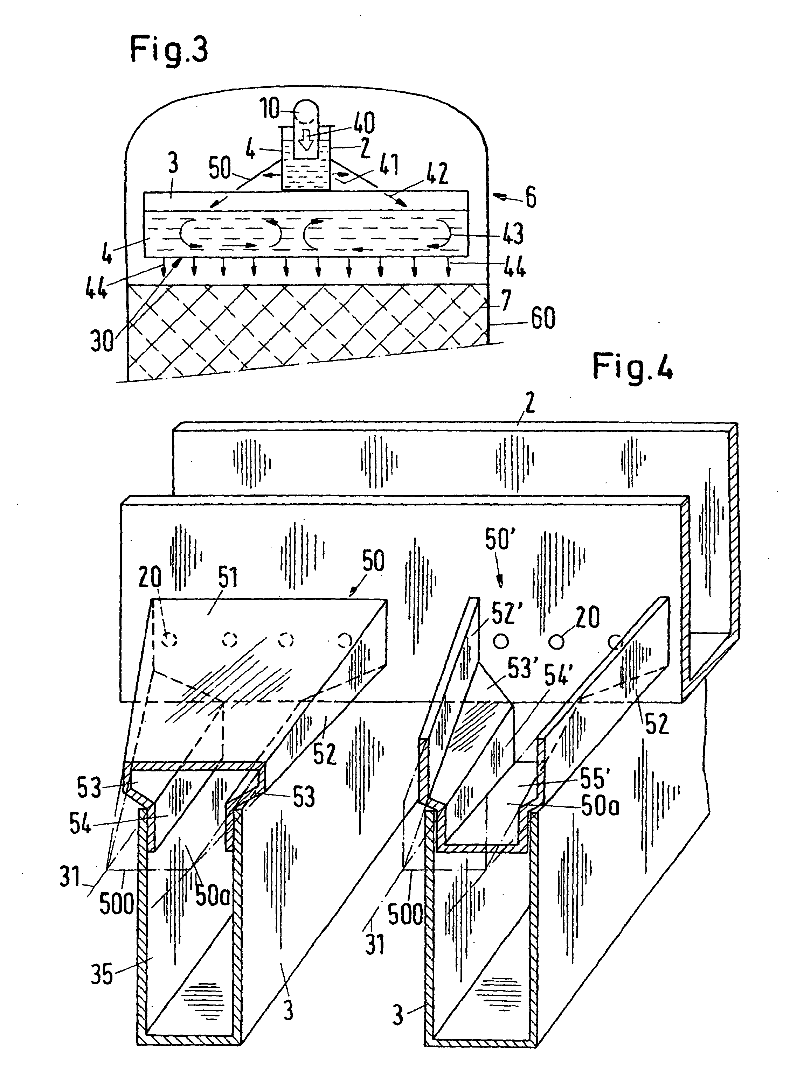

Der in Fig. 1 vereinfacht dargestellte Flüssigkeitsverteiler 1 ist ein bekannter "Elementverteiler"; er umfasst einen Hauptkanal 2 und Nebenkanäle 3, die nach oben offen sind. Konstruktive, für einen stabilen Aufbau des Flüssigkeitsverteilers 1 notwendige Elemente sind nicht dargestellt. Ein Ausflusssystem 30 der Nebenkanäle 3, durch das eine Flüssigkeit 4 in einer gleichmässigen Verteilung auf eine Packung 7 (siehe Fig. 3) abgegeben wird und das man sich beim gezeigten Verteiler 1 aus Grundlöchern bestehend vorstellen kann, ist ebenfalls nicht dargestellt.

Ein ausgebrochener Wandteil gibt den Blick frei auf das oben beschriebene Ausflusssystem des Hauptkanals 2. Dieses besteht aus haubenartigen Kammern 21, die am Boden des Hauptkanals 2 über Öffnungen angeordnet sind. Untere Ränder der Kammern sind mit den Rändern der Öffnungen dicht verbunden. Durchbrüche 22 lassen die aus dem Hauptkanal 2 austretende Flüssigkeit 4 in die den Kammern 21 zugeordneten Nebenkanäle 3 einströmen.

Bei dem in Fig. 2 ausschnittsweise dargestellten Flüssigkeitsverteiler 1 ist ein Ausflusssystem 5 des Hauptkanals 2 erkennbar, mit dem die zu verteilende Flüssigkeit nach einem vorgegebenen Verhältnis in die Nebenkanäle einspeisbar ist. Es ist ein erfindungsgemässer Flüssigkeitsverteiler 1, bei dem das Ausflusssystem 5 Durchbrüche 20 in den Seitenwänden des Hauptkanals 2 und - den Nebenkanälen 3 zugeordnet - Führungsorgane 50 für die durch die Durchbrüche 20 austretende Flüssigkeit 41 (Fig. 3) umfasst. Anders als für das in Fig. 1 gezeigte Ausflusssystem bildet dieses Ausflusssystem 5 kein Hindernis mehr für die im Hauptkanal 2 fliessende Flüssigkeit 4.

Die Durchbrüche 20 entsprechen hinsichtlich Anzahl und Grösse dem vorgegebenen Verhältnis, gemäss dem die Flüssigkeit 4 in die Nebenkanäle 3 zu verteilen ist.

In jedem Führungsorgan 50 verjüngt sich in Strömungsrichtung der Querschnitt und bewirkt mit dieser Formgebung die Flüssigkeitsführung, bei der die Flüssigkeit 4 in Form eines Strahls 42 verlustfrei in den zugeordneten Nebenkanal 3 eintritt. Durch die Flüssigkeitsführung im Führungsorgan 50 wird im wesentlichen nur die horizontale Geschwindigkeitskomponente des aus dem Hauptkanal 2 austretenden Flüssigkeitsstrahls 41 beeinflusst. Die Geschwindigkeitskomponente in Richtung des Nebenkanals 3 bleibt weitgehend unbeeinflusst. Der Flüssigkeitsstrahl 41 tritt mit einer grossen horizontalen und einer kleinen vertikalen Geschwindigkeitskomponente in den Nebenkanal 3 ein, so dass sich dort eine beruhigte, gleichmässige Strömung ausbildet. Es ergibt sich somit für die aus dem Aussflusssystem 30 der Nebenkanäle 3 ausströmende Flüssigkeit 44 eine Verteilung, die nur geringen Schwankungen unterworfen ist: die Flüssigkeitsverteilung ist fluktuationsarm.

Im erfindungsgemässen Verteiler 1 können die Durchbrüche 20 über die ganze Längserstreckung des Hauptkanals verteilt angeordnet werden. Dies erlaubt eine Positionierung der Durchbrüche 20 mit relativ grossen Abständen, so dass eine wechselseitige Beeinflussung benachbarter Durchbrüche 20 kleiner ausfällt, als wenn die Durchbrüche 20 sehr nahe nebeneinander angeordnet wären.

Der in Fig. 3 dargestellte Längsschnitt durch den oberen Teil einer Kolonne 6 (mit der Kolonnenwand 60) zeigt einen quergeschnittenen Hauptkanal 2, einen längsgeschnittenen Nebenkanal 3 und den oberen Teil einer geordneten Packung 7, die beispielsweise aus Lagen von gewellten Materialflächen - eine Kreuzkanalstruktur bildend - zusammengesetzt ist. Die zu behandelnde Flüssigkeit 4 wird über ein Rohr 10 in den Hauptkanal 2 eingespeist (Pfeil 40) und von dort über die Führungsorgane 50 in die Nebenkanäle 3 verteilt. Dort wird die Flüssigkeit 4 über Zirkularströmungen 43, die durch die Flüssigkeitsstrahlen 42 angetrieben werden, dem nicht dargestellten Ausflusssystem 30 weitgehend gleichmässig zugeführt.

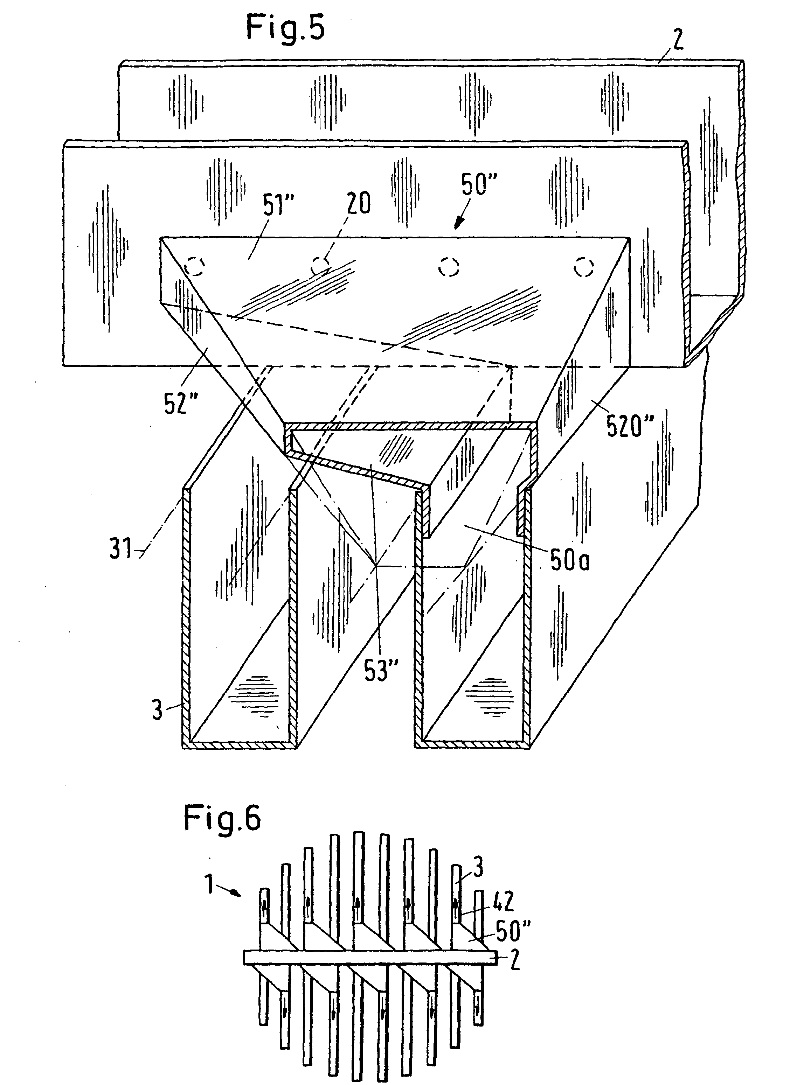

In den Figuren 4 und 5 sind Details zu drei Ausführungsformen des erfindungsgemässen Flüssigkeitsverteilers dargestellt, die sich durch verschieden ausgebildete Führungsorgane 50, 50' und 50" unterscheiden. In der Regel wird ein einheitlicher Typ des Führungsorgans - anders als in Fig. 4 dargestellt - verwendet. Zur besseren Veranschaulichung der Konstruktion sind jeweils die vorderen Teile 50a der Führungsorgane 50, 50' und 50" sowie die entsprechenden Teile der Nebenkanäle 3 weggeschnitten dargestellt. Die Seitenkanten der weggeschnittenen Teile 50a und der vordere Rand 500 sind strichpunktiert angedeutet. Die oberen Seitenkanten 31 der Nebenkanäle 3 sind ebenfalls strichpunktiert angedeutet.

In der Regel sind jedem Nebenkanal 3 in symmetrischer Weise auf den beiden Längsseiten des Hauptkanals 2 je ein Führungsorgan 50 oder 50' zugeordnet. Es ist aber beispielsweise auch möglich, dass den Nebenkanälen 3 in einer versetzten Anordnung der Führungsorgane 50" jeweils nur ein Führungsorgan 50" - siehe Fig. 6 - zugeordnet ist.

Das erste Führungsorgan 50 in Fig. 4 entspricht jenen, die in Fig. 2 gezeigt sind. Dieses Führungsorgan 50 und das zweite Führungsorgan 50' sind jeweils aus einem geeignet geformten Stück Blech durch Umformen hergestellt. Sie sind bezüglich einer vertikalen, in Längserstreckung des Nebenkanals 3 gerichteten Ebene spiegelsymmetrisch ausgebildet.

Das Führungsorgan 50 ist nach oben geschlossen: Es besteht aus einer schief liegenden Dachfläche 51, zwei vertikalen Flanken 52, zwei dreieckigen Teilfächen 53 und zwei Flanken 54, die unter einer Vorspannung zwischen die Seitenflächen 35 des Nebenkanals 3 eingesteckt sind. Die Flüssigkeit 4, die durch die Durchbrüche 20 aus dem Hauptkanal 2 ausströmt, wird zunächst von der Dachfläche 51 unter einem flachen Winkel nach unten geleitet und durch die Wandung 52, 53 des Führungsorgans 50 zur Vorderkante 500 geleitet, wo sie in den Nebenkanal 3 - auf dessen Breite verteilt - eintritt.

Das Führungsorgan 50' ist nach oben offen und weist folgende Teilfächen auf: vertikale Seitenflächen 52', schiefe Dreiecksflächen 53', vertikale Wandstücke 54', die in den Nebenkanal 3 hineinragen, und eine horizontale Verbindungsfläche 55'. Parabelförmige Flüssigkeitsstrahlen 41, die aus den Durchbrüchen 20 austreten, treffen direkt oder durch die Wandung 52', 53' geführt auf die Verbindungsfläche 55' auf, auf der die Flüssigkeit 4 in den Innenraum des Nebenkanals 3 weiter strömt.

Die Fig. 5 zeigt ein asymmetrisch ausgebildetes Führungsorgan 50", das sich über zwei benachbarte Nebenkanäle 3 erstreckt. Es weist folgende Teilfächen auf: Oberseite 51", Seitenflanken 52" sowie 520" und Dreieckfläche 53". Dieses Führungsorgan 50" eignet sich für einen Verteiler 1, wie er in Fig. 6 als Draufsicht abgebildet ist. Es können auch in einem mittleren Bereich symmetrische Führungsorgane 50 - jeweils zwei pro Nebenkanal - und asymmetrische Führungsorgan 50" in den äusseren Bereichen vorgesehen sein.

Das Ausflusssystem 5 der Nebenkanäle 3 erlaubt es, bei der Herstellung des erfindungsgemässen Verteilers 1 eine Verbindungstechnik anzuwenden, bei der die Führungsorgane 50 des Ausflusssystems 5 lediglich formschlüssige Verbindungen zum Hauptkanal 2 und zu den Nebenkanälen 3 bilden. Die Führungsorgane 50, 50' und 50" sind auf ihre zugeordneten Nebenkanäle 3 aufgesetzt, wobei dichte Verbindungen, insbesondere Schweissnähte, nicht mehr erforderlich sind. Dies ermöglicht eine kostengünstige Herstellung. Von Vorteil ist auch, dass die Führungsorgane 50 am Einsatzort montierbar sind.

Sie sind dort ebenfalls demontierbar, was eine gute Zugänglichkeit bei einer Reinigung des Verteilers 1 erlaubt.

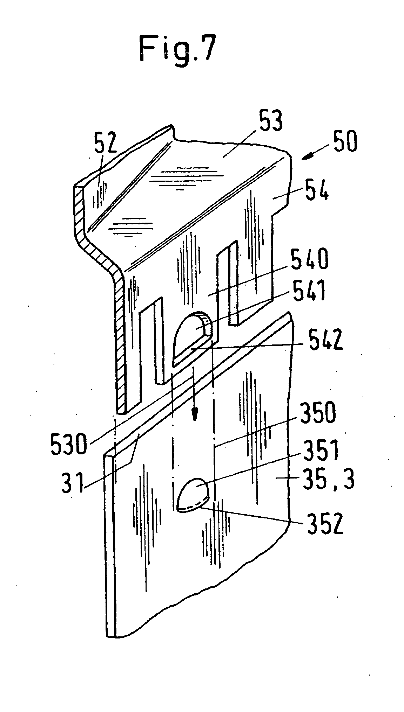

Die auf die Nebenkanäle 3 aufgesetzten Führungsorgane 50 sind vorzugsweise jeweils mittels einer lösbaren Schnapp- oder Steckverbindung an den Seitenwänden 35 des Nebenkanals 3 fixiert. In Fig. 7 ist die eine Hälfte einer solchen Schnappverbindung abgebildet. In der unteren Flanke 54 des in Fig. 4 dargestellten Führungsorgans 50 ist eine Zunge 540 vorgesehen, die federelastisch aus der Ebene der Flanke 54 auslenkbar ist. In dieser Zunge 540 ist ein Durchbruch 541 enthalten, der eine gerade untere Kante 542 aufweist. Beim Aufstecken des Führungsorgans 50 auf den Nebenkanal 3 (Pfeil 530) gleitet die Zunge 540 auf der Seitenwand 35 des Nebenkanal 3, wobei sich die zwei Endpunkte der Kante 542 auf den strichpunktiert gezeichneten Linien 350 bewegen. Eine durch Prägung erzeugte Erhebung 351 der Seitenwand 35, die eine in den Innenraum des Nebenkanals 3 hinein ragende Kante 352 aufweist, rastet im Durchbruch 541 der Zunge 540 ein. Die beiden Kanten 542 und 352 sind dabei so ausgebildet und angeordnet, dass sie in der tiefst möglichen Lage der Zunge 540 bündig neben einander zu liegen kommen und so eine Schnappverbindung herstellen. Eine entsprechende Schnappverbindung ist auch für die parallel liegende, in Fig. 7 nicht dargestellte Seitenwand des Nebenkanals 5 vorgesehen. Nach einem Einrasten der Erhebung 351 im Durchbruch 541 kann die elastische Zunge 540 etwas angehoben werden, um so die Schnappverbindung zu lösen.

Durch die Schnappverbindung, d.h. durch die Lage der Erhebung 351, ist auch die Lage des Führungsorgans exakt vorgegeben. Bei einer Montage des Verteilers 1 ergibt sich so - ohne dass ein Aufwand zum Durchführen von Messungen erforderlich ist - eine Zentrierung der Nebenkanäle. Ausserdem ergibt sich durch die fest auf den Nebenkanälen 3 aufgesteckten Führungsorgane 50 eine stabile Lage des Hauptkanals 2 bezüglich den Nebenkanälen 3.

## Patentansprüche

1. Flüssigkeitsverteiler (1) für Kolonnen (6) mit einem Hauptkanal (2), einer Mehrzahl von Nebenkanälen (3) und einem Ausflusssystem (5) des Hauptkanals, mit dem die zu verteilende Flüssigkeit (4) nach einem vorgegebenen Verhältnis in die Nebenkanäle einspeisbar ist, wobei das Ausflusssystem (5) Durchbrüche (20) in den Seitenwänden des Hauptkanals und - den Nebenkanälen zugeordnet - Führungsorgane (50) für die durch die Durchbrüche austretende Flüssigkeit (41) umfasst und die Führungsorgane hinsichtlich einer Flüssigkeitsführung derart ausgestaltet sind, dass die Flüssigkeit (42) jeweils in den zugeordneten Nebenkanal leitbar ist
**dadurch gekennzeichnet, dass** jedes Führungsorgan (50) einen die Flüssigkeitsführung bewirkenden Querschnitt aufweist, der sich in Strömungsrichtung verjüngt, und dass die Flüssigkeitsführung im wesentlichen nur die horizontale Geschwindigkeitskomponente beeinflusst und die Geschwindigkeitskomponente in Richtung des Nebenkanals (3) weitgehend unbeeinflusst lässt.

2. Flüssigkeitsverteiler nach Anspruch 1, **dadurch gekennzeichnet, dass** die Führungsorgane (50) auf ihre zugeordneten Nebenkanäle (3) aufgesetzt sind und vorzugsweise jeweils mittels einer lösbaren Schnappverbindung (352, 542) an den Seitenwänden (35) des Nebenkanals fixiert ist.

3. Flüssigkeitsverteiler nach Anspruch 1 oder 2, **dadurch gekennzeichnet**, dassjedem Nebenkanal (3) in symmetrischer Weise zwei Führungsorgane (50; 50') zugeordnet sind oder dass den Nebenkanälen in einer versetzten Anordnung der Führungsorgane jeweils nur ein Führungsorgan (50") zugeordnet ist.

4. Flüssigkeitsverteiler nach einem der Ansprüche 1 bis 3, **dadurch gekennzeichnet, dass** die Führungsorgane (50; 50') bezüglich einer vertikalen, in Längserstreckung der Nebenkanäle (3) gerichteten Ebene spiegelsymmetrisch und/oder asymmetrisch ausgebildet sind.

5. Flüssigkeitsverteiler nach einem der Ansprüche 1 bis 4, **dadurch gekennzeichnet, dass** die Führungsorgane (50, 50', 50") jeweils aus einem geeignet geformten Stück Blech durch Umformen hergestellt sind.

6. Flüssigkeitsverteiler nach Anspruch 5, **dadurch gekennzeichnet, dass** die Führungsorgane (50, 50") nach oben geschlossen sind.

7. Flüssigkeitsverteiler nach Anspruch 5, **dadurch gekennzeichnet, dass** die Führungsorgane (50') nach oben offen sind.

8. Kolonne (6) mit einem Flüssigkeitsverteiler (1) gemäss einem der Ansprüche 1 bis 7.

## Claims

1. A liquid distributor (1) for columns (6) having a main passage (2), a plurality of secondary passages (3) and an outflow system (5) of the main passage with which the liquid (4) to be distributed can be fed into the secondary passages in accordance with a pre-set ratio, wherein the outflow system (5) includes apertures (20) in the side walls of the main passage and - associated with the secondary passages - guide elements (50) for the liquid (41) exiting through the apertures, with the guide elements being designed with respect to a liquid guidance such that the liquid (42) can be led into the associated secondary passage, **characterised in that** each guide element (50) has a cross-section which brings about the liquid guidance and which narrows in the direction of flow; and **in that** the liquid guidance substantially only influences the horizontal speed component and leaves the speed component in the direction of the secondary passage (3) largely unaffected.

2. A liquid distributor in accordance with claim 1, **characterised in that** the guide elements (50) are set onto their associated secondary passages (3) and are preferably fixed at the side walls (35) of the secondary passage by means of a releasable snap connection (352, 542).

3. A liquid distributor in accordance with claim 1 or claim 2, **characterised in that** two guide elements (50; 50') are associated with each secondary passage (3) in a symmetrical manner; or **in that** only one guide element (50") each is associated with the secondary passages in an offset arrangement of the guide elements.

4. A liquid distributor in accordance with any of claims 1 to 3, **characterised in that** the guide elements (50; 50') are formed with mirror symmetry and/or in an asymmetrical manner with respect to a vertical plane directed in the longitudinal extent of the secondary passages (3).

5. A liquid distributor in accordance with any of claims 1 to 4, **characterised in that** the guide elements (50, 50', 50") are each manufactured by forming from a suitably shaped piece of sheet metal.

6. A liquid distributor in accordance with claim 5, **characterised in that** the guide elements (50, 50") are closed to the top.

7. A liquid distributor in accordance with claim 5, **characterised in that** the guide elements (50') are open to the top.

8. A column (6) having a liquid distributor (1) in accordance with any of claims 1 to 7.

## Revendications

1. Distributeur de liquide (1) pour des colonnes (6) avec un canal principal (2), une pluralité de canaux secondaires (3) et un système d'écoulement (5) du canal principal, par lequel le liquide à distribuer (4) peut être introduit selon un rapport prédéterminé dans les canaux secondaires, où le système d'écoulement (5) comprend des perçages (20) dans les parois latérales du canal principal ainsi que des organes de guidage (50), associés aux canaux secondaires, pour le liquide (41) sortant à travers les perçages, et où les organes de guidage, en ce qui concerne un guidage du liquide, sont configurés de façon que le liquide (42) puisse être amené à chaque fois dans le canal secondaire associé,
**caractérisé en ce que** chaque organe de guidage (50) présente une section transversale entraînant un guidage du liquide, qui diminue dans la direction d'écoulement, et **en ce que** le guidage du liquide agit sensiblement seulement sur la composante de vitesse horizontale et, dans une grande mesure, n'agit pas sur la composante de vitesse en direction du canal secondaire (3).

2. Distributeur de liquide selon la revendication 1, **caractérisé en ce que** les organes de guidage (50) sont placés sur leurs canaux secondaires associés (3) et sont fixés de préférence à chaque fois au moyen d'un assemblage à encliquetage relâchable (352, 542) aux parois latérales (35) du canal secondaire.

3. Distributeur de liquide selon la revendication 1 ou 2, **caractérisé en ce que** sont associés à chaque canal secondaire (3) d'une manière symétrique deux organes de guidage (50; 50'), ou **en ce qu'**il est associé aux canaux secondaires, selon une disposition décalée des organes de guidage, à chaque fois seulement un organe de guidage (50").

4. Distributeur de liquide selon l'une des revendications 1 à 3, **caractérisé en ce que** les organes de guidage (50; 50'), par rapport à un plan vertical orienté dans la direction longitudinale des canaux secondaires (3), sont réalisés d'une manière spéculairement symétrique et/ou d'une manière asymétrique.

5. Distributeur de liquide selon l'une des revendications 1 à 4, **caractérisé en ce que** les organes de guidage (50, 50', 50") sont fabriqués à chaque fois en une pièce de tôle formée d'une manière appropriée par formage.

6. Distributeur de liquide selon la revendication 5, **caractérisé en ce que** les organes de guidage (50, 50") sont fermés vers le haut.

7. Distributeur de liquide selon la revendication 5, **caractérisé en ce que** les organes de guidage (50') sont ouverts vers le haut.

8. Colonne (6) avec un distributeur de liquide (1) selon l'une des revendications 1 à 7.
